# EUROPÄISCHE PATENTSCHRIFT

(11) **EP 0 571 872 B1**
(45) Veröffentlichungstag und Bekanntmachung des Hinweises auf die Patenterteilung: **16.07.1997**
(21) Anmeldenummer: 93108059.2
(22) Anmeldetag: 18.05.1993
(51) Int. Cl.: F16L 55/16, F16L 19/075

(54) **Rohrkupplung**
Tube coupling
Raccord de tuyaux

(30) Priorität: 27.05.1992 SE 9201693
(43) Veröffentlichungstag der Anmeldung: 01.12.1993
(73) Patentinhaber: Tour & Andersson Hydronics Aktiebolag, 520 30 Ljung (SE)
(72) Erfinder: Marstorp, Leif, S-520 30 Ljung (SE)
(74) Vertreter: Siebmanns, Hubertus

(56) Entgegenhaltungen:
- CH-A- 290 402
- DE-A- 3 204 088
- FR-A- 627 206
- US-A- 2 772 100
- US-A- 3 829 136

## Beschreibung

Vorliegende Erfindung betrifft eine Rohrkupplung der in der Einleitung von Anspruch 1 näher bezeichneten Art.

Derartige Rohrkupplungen werden hauptsächlich angewendet zum Zusammenkuppeln von Rohrenden nach Entfernen von beispielsweise einem leckenden Rohrstück oder beim Verbinden von zusammenstossenden Rohrenden. Die Rohre sind hauptsächlich steif und bestehen aus Kunststoff, z.B. vom Typ PEM, PEL oder PVC, oder möglicherweise Metall. Dies führt zu einer Reihe von Problemen, die schwierig zu bemeistern sind, abgesehen davon, dass die Kupplungskonstruktion an sich einen Teil Probleme aufwirft.

Dadurch dass im wesentlichen steife Rohre sich nicht biegen lassen, ist man gezwungen, die Kupplung mit Teilen zu versehen, welche sich über die zusammenstossenden Rohrenden schieben lassen, um ein dauerhaftes und dichtes Verkuppeln sicherzustellen.

Bei den vorbekannten Kupplungen gibt es keine sichere Anzeige für eine optimale Kupplungslage der Teile, was ein Risiko für später entstehende Brüche und Leckage mit sich führt, da in der Regel nur eine einzige genaue Kupplungslage Sicherheit und Haltbarkeit der Kupplung garantiert.

Aufgabe vorliegender Erfindung ist es, sich dieser Probleme anzunehmen und sie zu beseitigen sowie den Stand der Technik auf diesem Gebiet durch spezielle und allgemeine Verbesserungen und Weiterentwicklungen weiterzuführen.

Diese Aufgaben werden erfindungsgemäss dadurch gelöst, dass eine Rohrkupplung der eingangs genannten Art im wesentlichen wie im kennzeichnenden Teil von Anspruch 1 angegeben beschaffen ist.

Weitere Merkmale und Vorteile der Erfindung gehen aus folgender Beschreibung unter Hinweis auf beigefügte Zeichnungen hervor, welche einige nicht begrenzende Ausführungsbeispiele der Erfindung darstellen. Im einzelnen zeigen:
- Fig. 1: a) - c) eine Seitenansicht sowie Endansichten einer erfindungsgemässen Kupplung,
- Fig. 2: eine entsprechende Ansicht derselben Kupplung in einem Teilschnitt mit in Ausgangslage sich befindender Positionierhülse,

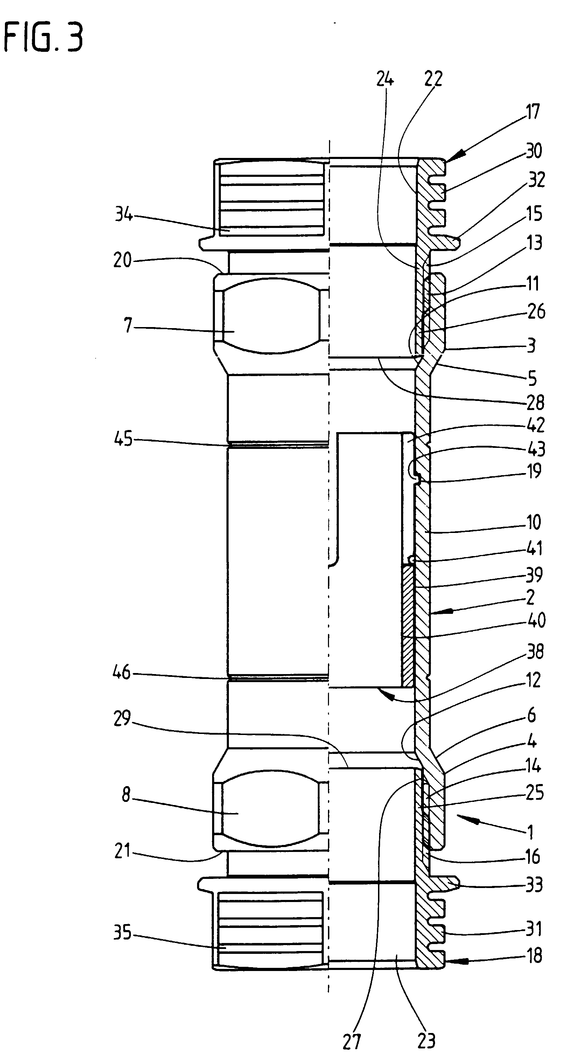

- Fig. 3: eine entsprechende Ansicht derselben Kupplung wie in Fig. 2 gezeigt mit in Endlage sich befindender Positionierhülse,
- Fig. 4: a) eine Endansicht, b) einen diametralen Längsschnitt, una c) eine Seitenansicht der zur Rohrkupplung gemäss der Erfindung gehörenden Positionierhülse sowie d) eine Seitenansicht einer abgeänderten Ausführungsform einer erfindungsgemässen Positionierhülse,
- Fig. 5: a) - c) verschiedene Ansichten einer weiteren alternativen Positionierhülse und
- Fig. 6: a) - - d) verschiede Phasen beim Zusammenkuppeln von Rohrenden mittels einer Rohrkupplung gemäss der Erfindung.

Die erfindungsgemässe Rohrkupplung ist insgesamt mit 1 bezeichnet. Sie besitzt ein im wesentlichen zylindrisches Gehäuse 2, welches bevorzugt aus einer Messinglegierung besteht. Die Gehäuseenden 3 und 4 sind zunächst erweitert in Form von kegelähnlichen Fasen 5 und 6, welche ihrerseits übergehen in abschliessende polygonale, z.B. Sechskantteile 7 und 8 für äusseren Angriff eines Werkzeuges 9, z.B. vom Typ Rohrzange.

Das Innere des Gehäuses 2 folgt der beschriebenen Aussenkontour und besitzt somit einen zylindrischen Teil 10 zwischen den beiden kegelförmigen Teilen 5 und 6, welcher Teil sich innerhalb der Fasen 5 und 6 kontourfolgend erweitert in Richtung auf das betreffende Gehäuseende, um Anschlag- und Pressfasen 11 und 12 zu bilden, im Anschluss an welche sich von den polygonalen Teilen umgebene Innengewinde 13 und 14 befinden, in die Aussengewinde 15 und 16 von Druckschrauben 17 und 18 passen, welche zum Einschrauben in beide Gehäuseenden vorgesehen sind. Das Gehäuse ist schliesslich mit einer ausserhalb der axialen Mitte angeordneten, umlaufenden Innennut 19 von vorzugsweise U-förmigem Profil mit scharfen Ecken und Kanten versehen. Die beiden Stirnflächen 20 und 21 des Gehäuses sind bevorzugt versehen mit einer im einzelnen nicht gezeigten Rändelung od.dgl., deren Aufgabe es ist, ähnlich wie eine Sicherungsscheibe zu wirken. Statt oder ausser einer solchen Friktionswirkung zu Arretierungszwecken kann die Rändelung auch eine Abbremsfunktion haben mit dem Ziel, weiteres Einschrauben der Druckschrauben und auf diese Weise Beschädigungen an den Kupplungsteilen zu verhindern.

Die Druckschrauben 17, 18 sind versehen mit einer durchgehenden zylindrischen Passage 22 bzw. 23, deren Innendurchmesser wenigstens angenähert dem Innendurchmesser des zylindrischen Gehäuseteiles entspricht. Genannte Aussengewinde 15, 16 sind an Stutzen 24 bzw. 25 vorgesehen, deren freier Endteil 26 bzw. 27 gewindefrei und mit einer leichten Fase 28 bzw. 29 versehen ist und eine Wanddicke von 1-5 mm, bevorzugt angenähert 2.5 mm zeigt. Ferner zeigen die Druckschrauben an ihren von den Stutzen gewendeten Enden polygonale z.B. Sechskantteile 30 und 31, welche vor dem Übergang in die Aussengewinde angrenzen an umlaufende Stoppflansche 32 bzw. 33, welche dazu vorgesehen sind, in angezogener Kupplungslage an der betreffenden Gehäusestirnfläche 20 bzw. 21 anzuliegen, bevorzugt bei leichter Materialdeformierung bei Kontakt mit genannter Rändelung zwecks Erhalt einer besonderen Arretierfunktion. Die Druckschrauben können aus Azetalkunststoff bestehen und durch Formspritzen hergestellt sein, wobei die Materialdicke reduzierende Hohlräume 34 bzw. 35 und 36 bzw. 37 in den polygonalen Teilen in sowohl radialer als auch axialer Richtung ausgeformt sein können.

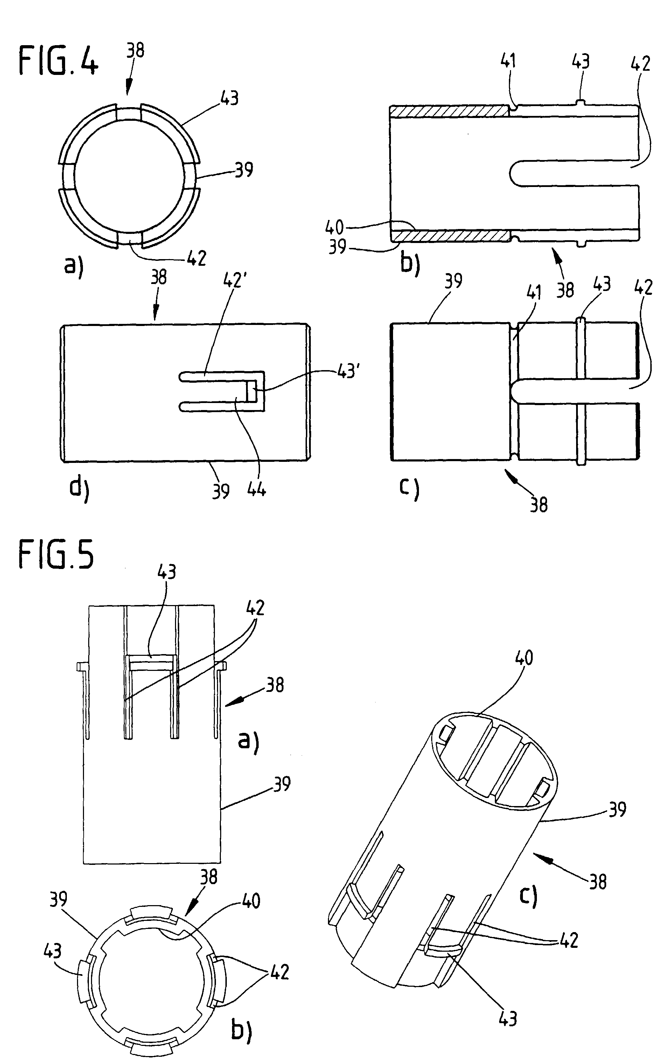

Schliesslich gehört zur erfindungsgemässen Rohrkupplung eine Positionierhülse 38 mit im wesentlichen durchgehender zylindrischer Aussenund Innenkontour 39 bzw. 40 abgesehen von einer bevorzugt um die Mitte der Hülse angeordneten Aussennut 41, von dem einen Hülsenende bis zu genannter Aussennut verlaufenden Aussparungen 42 und schliesslich einem etwa mittig zwischen genannter Aussennut und den Mündungsbereichen der Aussparungen, die mit dem betreffenden Hülsenende zusammenfallen, gelegenen, radial vorstehenden Arretierwulst 43, welcher folglich mit Unterbrechungen versehen ist, welche der Erstreckung der Aussparungen in Umfangsrichtung entsprechen. Der Wulst kann auch näher oder geradezu an genanntem Hülsenende gelegen sein. Die Hülse ist bevorzugt hergestellt aus Azetalkunststoff und genannte Nut, die Aussparungen und der Wulst können durch Drehen bzw. Fräsen hergestellt sein. Es ist jedoch auch denkbar, die Hülse durch Formspritzen herzustellen mit einem bevorzugten Aussehen gemäss Fig. 4 d), wobei U-förmige Aussparungen 42' rundherum von Hülsenmaterial umgeben sind, so dass Zungen 44 gebildet werden, an der Aussenseite von deren freien Enden ein Wulst 43' angeordnet ist. Diese Ausführung hat ausser herstellungs- und preismässigen Vorteilen bei grossen Serien insbesondere den Vorteil, dass die Hülse zwei geschlossene Enden aufweist, gegen welche die gegeneinander gerichteten Rohrenden stumpf anliegen ohne jegliche Gefahr eines Vorbeischiebens auch bei sehr dünnwandigen Rohren. Die Hülse kann gemäss einer nicht gezeigten Ausführung auch aus Metall bestehen und mit einem federnden Ring od.dgl. versehen sein, dessen Haltekraft an der Fase überwunden werden kann durch radiales Zusammendrücken des Ringes oder von Teilen desselben oder an demselben.

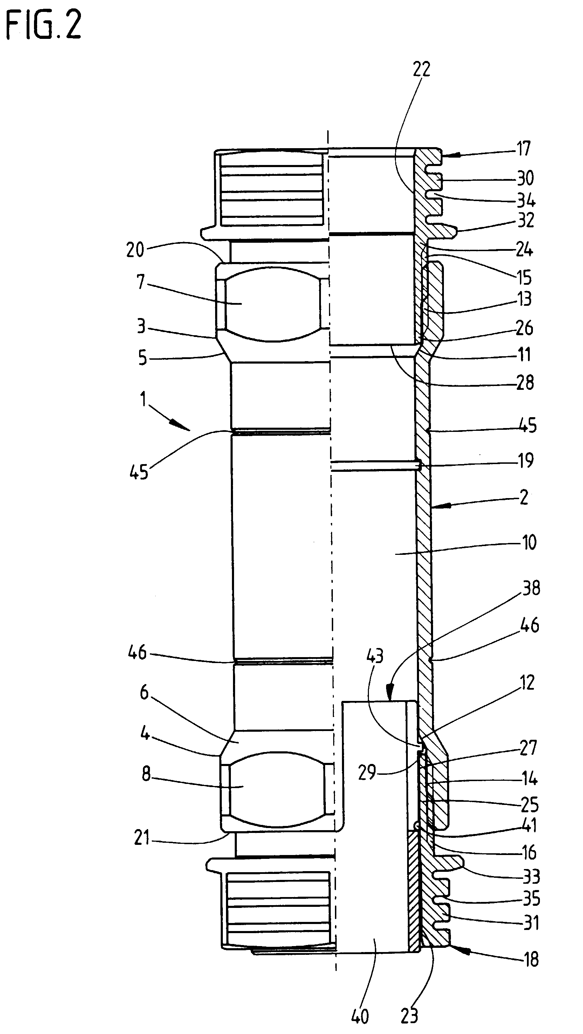

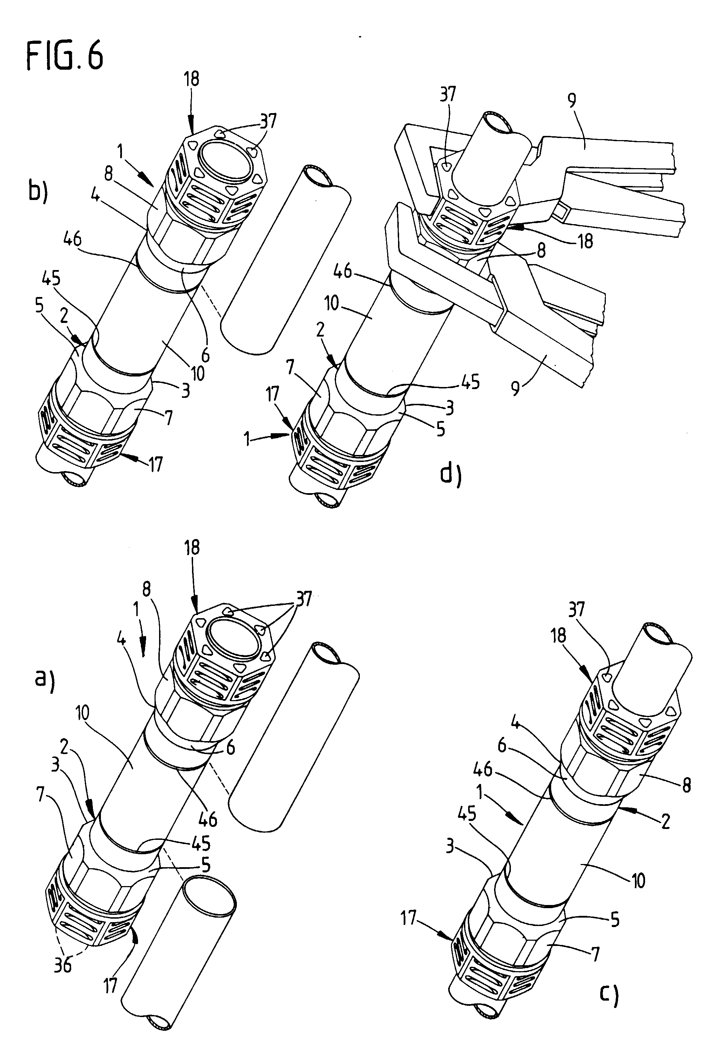

Eine solche Rohrkupplung funktioniert und wird angewendet auf folgende Weise. Die Rohrkupplung wird gemäss Fig. 2 bzw Fig. 6 a zusammengebaut, wobei beide Druckschrauben voll eingeschraubt sind, jedoch ohne angezogen zu sein, und die Hülse ist in die Passage 23 der einen Druckschraube 18 eingesetzt. Hierbei wird die Hülse zunächst in das betreffende Gehäuseende mit dem wulstnahen Ende voran eingeführt, wobei der Wulst an der Fase 12 anzuliegen kommt, welche in dieser Phase ein Einführstoppmittel für die Hülse bildet. Hierauf wird die Druckschraube 18 über die Hülse gestreift und in das Gehäuse eingeschraubt, bis die freie Stutzenstirnfläche 29 anzuliegen kommt an dem Wulst, welcher und damit die Hülse auf diese Weise gegen unbeabsichtitigtes Verschieben und Entfernen in beide Axialrichtungen arretiert werden. Die komplette Kupplung ist damit klar zum Anwenden ohne irgendwelche weitere, die Kupplung selbst betreffende Vorbereitungen und sie entbehrt völlig lose Teile. Die einzig erforderliche externe Vorbereitung ist die Entfernung eines z.B. schadhaften Teiles aus einer Rohrleitung, die Länge welchen Teiles etwa der Länge der Hülse entspricht oder bevorzugt etwas kürzer als die Hülse ist, was auf eine bevorzugte Weise gemäss der Erfindung anzeigbar ist auf der Aussenseite des Gehäuses, welches versehen ist mit zwei bevorzugt umlaufenden Abschneide- oder Abstandsanweisungen 45 und 46 in Form von Nuten od.dgl. In derartige Nuten kann man auch physisch die gezahnte Seite einer Säge od. dgl. einlegen, um auf diese Weise eine schnelle und zuverlässige Lokalisierungsanweisung für das Abschneiden zu erhalten. Sind zwei bereits zugeschnittene Rohrenden von noch in Längsrichtung verschiebbaren Rohren zusammenzuziehen, so lassen sich auch genannte Anweisungen anwenden für eine schnelle und einfache Bestimmung des erforderlichen oder optimalen Kupplungsabstandes.

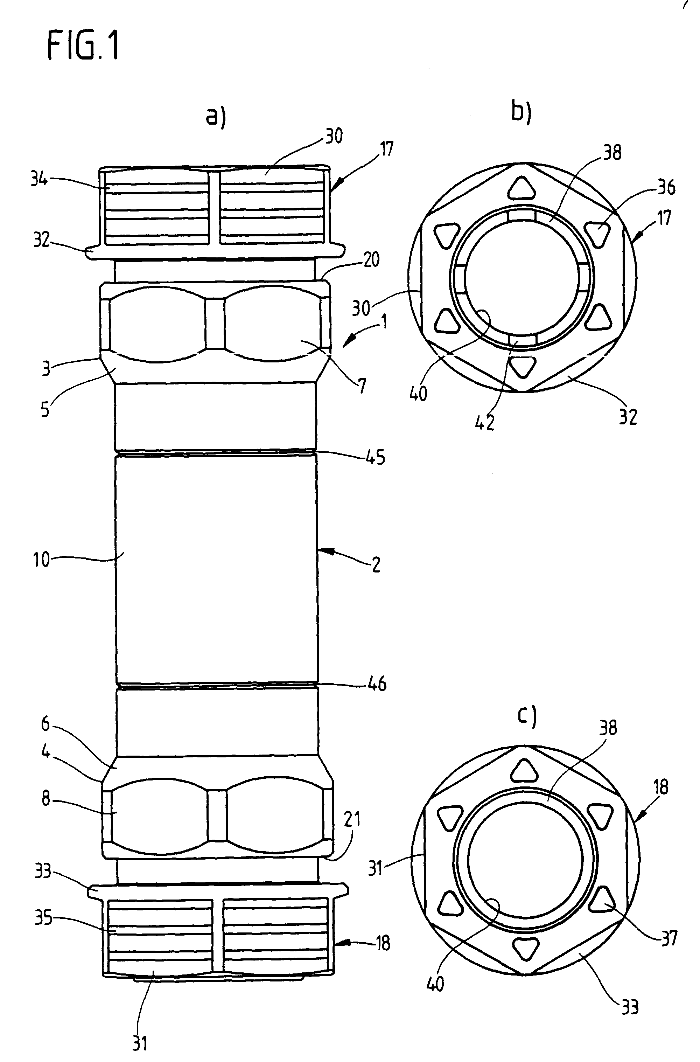

In der nächsten Phase wird die nicht mit einer Hülse versehene Druckschraube mit dem Gehäuse über das eine Rohrende geführt bis dieses Rohrende gegen das innere Ende der Hülse anschlägt. Dies ist in Fig. 6 b gezeigt, worauf die mit der Hülse versehene Druckschraube mit dem Gehäuse und genanntem einen Rohrende und das andere Rohrende radial gegeneinander geführt werden, bis beide Rohrenden miteinander fluchten, wobei genanntes anderes Rohrende bevorzugt dicht oder mit einem gewissen Druck an dem äusseren Ende der Hülse anliegt, welches Ende etwas aus der betreffenden Druckschraube hinausragen kann, was aus Fig. 1 und 2 hervorgeht. Jetzt ist eine Kupplungsphase gemäss Fig. 6 c) erreicht, worauf das Gehäuse mit der Druckschraube ohne Hülse über die nun ortsfeste Hülse geführt wird unter Überwindung der von dem Wulst und der Fase 9 erzeugten Haltekraft, was leicht möglich und genau voreinstell- oder wählbar ist durch genannte Aussparungen bzw. die Aussennut der Hülse. Das Hülsenmaterial zwischen den genannten Aussparungen wird nun elastisch zum Inneren der Hülse hin abgebogen und der Wulst gleitet an der Fase 12 vorbei und von dieser weg zur Mitte des Gehäuses, bis der Wulst in die Innennut in der Gehäusepassage einschnappt und dort das Gehäuse mit beiden Druckschrauben gegen weiteres Verschieben vor oder zurück arretiert, was sehr wirksam ist dadurch, dass die Innennut mit scharfen Kanten ausgeführt ist, welche nicht gestatten, dass die Hülse bei grösserer Druckausübung in axialer Richtung, z.B. bei Festschrauben der Rohrenden, mit dem Wulst aus der Nut heraus und an dieser vorbei kriecht.

In der Kupplungsphase gemäss Fig. 6 d) geschieht ein Anziehen von beiden Druckschrauben mittels Werkzeugen, vorzugsweise bis die Schraubenflansche dicht an dem Gehäuse anliegen und mit ihrem Material in die vorzugsweise vorhandenen Rändelungen eingepresst werden, wodurch eine besondere Abbremswirkung und/oder eine Arretierwirkung erhalten werden. Bei diesem Anziehen werden die Stutzen der Schrauben radial zusammengepresst und gleichzeitig damit die eingeschlossenen Rohrenden, wodurch ein haltbare und leckagefreie Kupplung erhalten wird, bei der alle Momente genau im Voraus berechnet sind, so dass Fehler von beispielsweise Leien sogut wie ausgeschlossen sind.

An dem Gehäuse lassen sich natürlich Anschlussstutzen für den Anschluss eines driten und evt. vierten Rohrendes vorsehen.

## Patentansprüche

1. Rohrkupplung (1) zum Zusammenkuppeln von Enden von insbesondere im wesentlichen steifen Rohren, welche Kupplung ein im wesentlichen zylindrisches Gehäuse (2) besitzt, dessen Enden mit radialen Erweiterungen versehen sind, zunächst in Form von Anschlag- und Pressfasen (11 bzw. 12) und anschliessend nach aussen mit Innengewinden (13 bzw. 14), welche von äusseren polygonalen Gehäuseenden (3 bzw. 4) zum Angriff eines Werkzeuges (9) umgeben sind, ferner mit in die Gehäuseenden einschraubbaren Druckschrauben (17 bzw. 18) mit einer durchgehenden zylindrischen Passage (22 bzw. 23) mit polygonalen äusseren Enden (30 bzw. 31) und in das Gehäuse einführbaren Stutzen (24 bzw. 25) mit Aussengewinden (15 bzw. 16), die mit den Innengewinden zusammenwirken, welche Stutzen ein gewindefreies freies Ende (26 bzw. 27) aufweisen, welches zum Komprimieren vorgesehen ist unter Komprimieren eines eingeschobenen Rohrendes bei Anziehen der Druckschrauben bei Passieren der Anschlag- und Pressfasen, **dadurch gekennzeichnet, dass** in der einen Druckschraube (18) in deren Passage (23) eine Positionierhülse (38) durch gegenseitig wirkende Arretiermittel (11,28;12,29;43) primär arretiert angeordnet ist, welche dazu vorgesehen ist, im Anschluss an das Einführen des einen Rohrendes in den Hauptteil des zylindrischen Teiles (10) des Gehäuses durch die andere Druckschraube (17) dank genannter primärer Arretierung ein Einführungsstoppmittel für das eine Rohrende zu bilden, und dass die Hülse zum stumpfen Anliegen oder Exponieren gegen das andere Rohrende vorgesehen ist, um im Anschluss hieran in Bezug auf die beiden zum Anliegen gegen die Hülse kommenden Rohrenden einen ortsfesten Kupplungsteil zu bilden, im Verhältnis zu welchem das Gehäuse mit beiden eingeführten Druckschrauben vor deren Anziehen in eine Mittellage über die Hülse verschiebbar ist, welche Hülse in dieser Lage gegenüber dem Gehäuse durch teilweise genannte, gegenseitig wirkende Arretiermittel (19, 43) endlich arretierbar ist.

2. Rohrkupplung nach Anspruch 1, **dadurch gekennzeichnet, dass** das Gehäuse (2) aus einer Messinglegierung besteht.

3. Rohrkupplung nach Anspruch 1, **dadurch gekennzeichnet, dass** die Gehäuseenden (3 und 4) zunächst erweitert sind in Form von kegelähnlichen Fasen (5 und 6), welche ihrerseits in abschliessende polygonale, z.B. Sechskantteile (7 und 8) übergehen zum äusseren Angriff genannten Werkzeuges (9), insbesondere einer Rohrzange, d a s s das Innere des Gehäuses (2) der genannten Aussenkontour folgt und somit genannten zylindrischen Teil (10) zwischen den beiden kegelförmigen Enden (5 und 6) einschliesst, welcher Teil innerhalb der Fasen (5 und 6) kontourfolgend erweitert ist in Richtung auf das betreffende Gehäuseende, um genannte Anschlag- und Pressfasen (11 und 12) zu bilden, im Anschluss an welche sich genannte von den polygonalen Teilen umgebene Innengewinde (13 und 14) befinden, die mit Aussengewinden (15 und 16) an genannten Druckschrauben (17 und 18) zusammenwirken.

4. Rohrkupplung nach Anspruch 1, **dadurch gekennzeichnet, dass** das Gehäuse mit einer vorzugsweise ausserhalb der axialen Mitte angeordneten umlaufenden Innennut (19) mit vorzugsweise U-förmigem Profil mit scharfen Ecken und Kanten versehen ist, welche Innennut eines genannter Arretiermittel ist.

5. Rohrkupplung nach Anspruch 1, **dadurch gekennzeichnet, dass** die beiden Stirnflächen (20 und 21) des Gehäuses mit einer Rändelung od.dgl. versehen sind.

6. Rohrkupplung nach Anspruch 1 oder 5, **dadurch gekennzeichnet, dass** der Innendurchmesser der Passage (22 bzw. 23) angenähert dem Innendurchmesser des zylindrischen Gehäuseteils entspricht, und/oder d a s s der freie Endteil (26 bzw. 27) genannter Stutzen (24 bzw. 25) mit einer leichten Fase (28 bzw. 29) versehen ist und eine Wanddicke von 1-5 mm aufweist, vorzugsweise angenähert 2,5 mm.

7. Rohrkupplung nach Anspruch 1, **dadurch gekennzeichnet, dass** genannte polygonale, z.B. Sechskantteile (30 und 31) der Druckschrauben (17 bzw. 18) vor dem Übergang zu den Aussengewinden an einen umlaufenden Stoppflansch (32 bzw. 33) grenzen, welcher dazu vorgesehen ist, in angezogener Kupplungslage an der betreffenden Gehäusestirnfläche (20 bzw. 21) anzuliegen, vorzugsweise unter leichter Materialdeformierung bei Kontakt mit einer gegebenenfalls vorhandenen genannten Rändelung zwecks Erhalt einer besonderen Arretierfunktion, und **dass** die Druckschrauben bevorzugt aus Azetalkunststoff bestehen und durch Formspritzen hergestellt sind, wobei materialreduzierende Hohlräume (34 bzw. 35) und (36 bzw. 37) bevorzugt in dem polygonalen Teil in sowohl radialer als auch axialer Richtung ausgeformt sind.

8. Rohrkupplung nach Anspruch 1, **dadurch gekennzeichnet, dass** die Positionierhülse (38) eine im wesentlichen durchgehende zylindrische Aussen- und Innenkontour (39 bzw. 40) aufweist abgesehen von einer vorzugsweise um die Mitte der Hülse herum angeordneten Aussennut (41), von dem einen Hülsenende bis zu genannter Aussennut verlaufende Aussparungen (42) und schliesslich einem etwa zwischen genannter Aussennut und den Mündungsbereichen der Aussparungen, die mit dem betreffenden Hülsenende zusammenfallen, gelegener, radial abstehender Arretierwulst (43), welcher folglich mit Unterbrechungen versehen ist, welche der Erstreckung der Aussparungen in Umfangsrichtung entsprechen und eines genannter Arretiermittel ist, oder **dass** der Wulst näher zu oder an besagtem Hülsenende angeordnet ist.

9. Rohrkupplung nach Anspruch 1, **dadurch gekennzeichnet, dass** die Hülse bevorzugt aus Azetalkunststoff hergestellt ist, und/oder **dass** genannte Nut, die Aussparungen und der Wulst hergestellt sind durch Drehen bzw. Fräsen, oder **dass** die Hülse formgespritzt ist mit U-förmigen Aussparungen (42'), welche rundherum von Hülsenmaterial umgeben sind unter Bildung von Zungen (44), auf der Aussenseite von deren freien Enden genannter Wulst (43') angeordnet ist.

10. Rohrkupplung nach Anspruch 1, **dadurch gekennzeichnet, dass** die Hülse aus Metall besteht und mit einem federnden Ring od.dgl. versehen ist, dessen Haltekraft an der Fase zum Überwinden vorgesehen ist durch radiales Zusammendrücken des Ringes oder Teile desselben oder an demselben.

## Claims

1. A tube coupling (1) for joining together the ends of particularly essentially rigid tubes, which coupling incorporates a substantially cylindrical housing (2), the ends of which are radillay widened, initially by way of abutment and press bevels (11 and 12, respectively) and connecting thereto by way of parts with interior threads (13 and 14, respetively) and surrounded by exterior polygonal ends (3 and 4, respectively) of said housing for engagement of a tool (9), furthermore incorporating thrust bolts (17 and 18, respectively) with a throughgoing cylindrical passage (22 and 23, respectvively) and with exterior polygonal ends (30 and 31, respectively), which bolts are screwable into said housing ends and are provided with connectors (24 and 25, respectively) insertable into said housing and furnished with exterior threads (15 and 16, respectively) co-operating with said interior threads, which connectors show a thread-free end (26 and 27, respectively) intended for compression by compressing an inserted tube end when screwing in said thrust bolts beyond said abutment and press bevels, **characterized in that** in the passage (23) of the one thrust bolt (18), by means of mutually active arresting means (11, 28;12,29;43), intially is provided arrested a positioning sleeve (38), which is intended to form an insertion stop means for the one tube end subsequent to insertion of the latter tube end into the main part of the cylindrical part (10) of said housing through the other thrust bolt (17) thanks to said initial arresting, **and that** said sleeve is provided to bluntly abut or being exposed to the other tube end to form, subsequently hereto, in relation to both tube ends abutting said sleeve, a stationary coupling part, in relation to which said housing with both thrust bolts inserted, prior to screwing in the latter, is displaceable into a central position over said sleeve which, in this position, is finally lockable in relation to the housing by means of said partly mentioned mutually active arresting means (19,43).

2. A tube coupling according to claim 1, **characterized** **in that** said housing (2) is made of a brass alloy.

3. A tube coupling according to claim 1, **characterized in that** the said housing ends (3 and 4) initially are widened by way of cone-like bevels (5 and 6) which, in their turn, connect to terminating polygonal, e.g. hexagonal, parts (7 and 8) for exterior engagement of said tool (9), particularly a pipe wrench, **that** the interior of the housing (2) is congruent with the said exterior contour and thus confines said cylindrical part (10) between both cone-like ends (3 and 4), which part, within said bevels (5 and 6), is congruently widened towards the respective housing end to form said abutment and press bevels (11 and 12), connecting thereto are provided said interior threads (13 and 14) surrounded by said polygonal parts, which latter threads co-operate with exterior threads (15 and 16) at said thrust bolts (17 and 18).

4. A tube coupling according to claim 1, **characterized in that** said housing is provided with a circumferential interior groove (19), preferably outside the axial center, which groove preferably is U-shaped in cross-section with sharp corners and edges, and which is one of said arresting means.

5. A tube coupling according to claim 1, **characterized in that** both end surfaces (20 and 21) of said housing are provided with a milled pattern.

6. A tube coupling according to claim 1 or 5, **characterized in that** the internal diameter of said passage (22 and 23, respectively) approximately corresponds to the internal diameter of said cylindrical part of the housing, **and/or** t h **a**t the free end part (26 and 27, respectively) of said connectors (24 and 25, respectively) is provided with a slight bevel (28 and 29, respectively) and shows a wall thickness of 1-5 mm, preferably approximately 2,5 mm.

7. A tube coupling according to claim 1, **characterized in that** said polygonal, e.g. hexagonal, parts (30 and 31) of said thrust bolts (17 and 18, respectively) before connecting to said exterior threads border a circumferential stop flange (32 and 33, respectively), which is provided to abut, in coupling position, against the respective housing end surface (20 and 21, respectively), preferably with slight material deformation when in contact with a said milled pattern for achieving a special arresting function, **and that** said thrust bolts preferably consist of acetal plastic material and are produced by means of injection moulding, material reducing hollow spaces (34 and 35; 36 and 37, repectively) preferably being formed in said polygonal part, both in radial and in axial direction.

8. A tube coupling according to claim 1, **characterized in that** said positioning sleeve (38) shows a substantially throughgoing cylindrical exterior and interior contour (39 and 40, respectively), apart from an external groove (41) which, preferably, surrounds the central part of said sleeve, from recesses (42) extending from one sleeve end to said external groove and finally apart from a radially projecting arresting flange (43), which is arranged roughly between said external groove and the open ends of said recesses, which latter ends coincide with the respective sleeve end, which arresting flange consequently is interrupted corresponding to the extension of said recesses in circumferential direction, and which is one of said arresting means, **or that** said arresting flange is provided closer towards or at the end of said sleeve end.

9. A tube coupling according to claim 1, **characterized in that** said sleeve preferably is made of acetal plastic material, **and/or that** said groove, said recesses and said arresting flange are produced by turning or milling, **or that** said sleeve is produced by injection moulding with U-shaped recesses (42'), which circumferentially are surrounded by sleeve material with forming of tongues (44), at the outside of the free ends of which said arresting flange (43') is provided.

10. A tube coupling according to claim 1, **characterized in that** said sleeve is made of metal and is furnished with a springy ring or the like, the retaining force of which is provided to be exceeded at said bevel by radial compression of the ring or of parts of or at same.

## Revendications

1. Raccord pour tubes (1) pour le raccordement d'extrémités de tubes, en particulier essentiellement rigides, ledit raccord possédant un logement (2) essentiellement cylindrique dont les extrémités sont munies d'élargissements radiaux, d'abord sous forme de chanfreins de butée et de pressage (11, respectivement 12), et présentant ensuite vers l'extérieur des filets de vis internes (13, respectivement 14) qui sont entourés d'extrémités de logement polygonales externes (3, respectivement 4) pour la préhension d'un outil (9), comprenant en outre des vis de serrage (17, respectivement 18) qui peuvent venir s'insérer par vissage dans les extrémités de logement et possédant un passage cylindrique traversant (22, respectivement 23) muni d'extrémités externes polygonales (30, respectivement 31), et des tubulures (24, respectivement 25) aptes à venir s'insérer dans le logement et présentant des filets de vis externes (15, respectivement 16) qui coopèrent avec les filets de vis internes, lesdites tubulures présentant une extrémité libre (26, respectivement 27) exempte de filets de vis, qui est prévue pour la compression lorsqu'on comprime une extrémité de tube insérée lors du serrage des vis de serrage au cours de leur passage par les chanfreins de butée et de pressage, caractérisé en ce que, dans le passage (23) de la première vis de serrage (18), est disposé un manchon de positionnement (38) soumis à un blocage primaire via des agents de blocage (11, 28, 12, 29; 43) à action antagoniste, qui est prévu pour former, directement après l'insertion de la première extrémité de tube dans la partie principale de la partie cylindrique (10) du logement, via l'autre vis de serrage (17), grâce au blocage primaire mentionné, un moyen d'arrêt d'insertion pour la première extrémité de tube, et en ce que le manchon est prévu pour la mise en contact bout à bout avec ou l'exposition à l'autre extrémité de tube, pour immédiatement après former une partie de raccord stationnaire par rapport aux deux extrémités de tubes venant se disposer bout à bout contre le manchon, partie par rapport à laquelle le logement est à même de coulisser, dans l'état dans lequel les deux vis de serrage ont été insérées, avant leur serrage, dans une position médiane, par-dessus le manchon, ledit manchon étant à même d'être finalement bloqué dans cette position par rapport au logement via les moyens de blocage (19, 43) à action antagoniste, mentionnés en partie.

2. Raccord pour tubes selon la revendication 1, caractérisé en ce que le logement (2) est constitué d'un alliage de laiton.

3. Raccord pour tubes selon la revendication 1, caractérisé en ce que les extrémités de logement (3 et 4) sont d'abord élargies sous forme de chanfreins coniques (5 et 6) qui, pour leur part, se transforment en parties d'obturation polygonales par exemple hexagonales (7 et 8) qui peuvent être saisies de l'extérieur par l'outil mentionné (9), en particulier par une clé serre-tubes, en ce que l'intérieur du logement (2) épouse le contour externe mentionné et enserre ainsi la partie cylindrique mentionnée (10) entre les deux extrémités coniques (5 et 6), ladite partie étant élargie à l'intérieur des chanfreins (5 et 6) en épousant le contour, dans la direction de l'extrémité de logement correspondante pour former les chanfreins de butée et de pressage (11 et 12) mentionnés, en position adjacente desquels se trouvent les filets de vis internes mentionnés (13 et 14) entourés par les parties polygonales, qui coopèrent avec des filets de vis externes (15 et 16) prévus sur les vis de serrage (17 et 18) mentionnées.

4. Raccord pour tubes selon la revendication 1, caractérisé en ce que le logement est muni d'une rainure interne périphérique (19) disposée de préférence à l'extérieur du milieu axial, possédant de préférence un profil en U, ainsi que des angles aigus et des arêtes vives, ladite rainure interne étant un des agents de blocage mentionnés.

5. Raccord pour tubes selon la revendication 1, caractérisé en ce que les deux faces frontales (20 et 21) du logement sont munies d'un moletage ou analogues.

6. Raccord pour tubes selon la revendication 1 ou 5, caractérisé en ce que le diamètre interne du passage (22, respectivement 23) correspond approximativement au diamètre interne de la partie de logement cylindrique et/ou en ce que la partie terminale libre (26, respectivement 27) des tubulures mentionnées (24, respectivement 25) est munie d'un léger chanfrein (28, respectivement 29) et présente une épaisseur de paroi de 1-5 mm, de préférence d'approximativement 2,5 mm.

7. Raccord pour tubes selon la revendication 1, caractérisé en ce que les parties polygonales mentionnées (30 et 31), par exemple hexagonales des vis de serrage (17, respectivement 18) avant qu'elles ne se transforment en filets de vis externes aboutissent à une bride d'arrêt périphérique (32, respectivement 33) qui est prévue, dans la position serrée du raccord, pour venir se disposer contre la face frontale correspondante (20, respectivement 21) du logement, de préférence en subissant une légère déformation matérielle lors du contact avec un moletage mentionné éventuellement présent dans le but d'obtenir une fonction de blocage particulière, et en ce que les vis de serrage sont constituées de préférence d'une matière synthétique d'acétal et sont réalisées par moulage par injection, les espaces creux (34, respectivement 35 et 36, respectivement 37) réduisant la matière étant façonnés de préférence dans la partie polygonale aussi bien dans le sens radial que dans le sens axial.

8. Raccord pour tubes selon la revendication 1, caractérisé en ce que le manchon de positionnement (38) présente un contour externe et interne (39, respectivement 40) cylindrique essentiellement en continu, à l'exception d'une rainure externe (41) disposée de préférence autour du milieu du manchon, d'évidements (42) s'étendant depuis la première extrémité de manchon jusqu'à la rainure externe mentionnée et enfin, d'une nervure de blocage (43) faisant saillie en direction radiale, disposée approximativement entre la rainure externe mentionnée et les zones d'orifices des évidements qui coïncident avec l'extrémité de manchon correspondante, ladite nervure de blocage étant ensuite munie d'interruptions qui correspondent à l'étendue des évidements en direction périphérique et étant un des agents de blocage mentionnés, ou en ce que la nervure est disposée plus près de ou contre l'extrémité de manchon mentionnée.

9. Raccord pour tubes selon la revendication 1, caractérisé en ce que le manchon est réalisé de préférence en une matière synthétique d'acétal et/ou en ce que la rainure mentionnée, les évidements et la nervure sont réalisés par façonnement au tour, respectivement par fraisage, ou en ce que le manchon est moulé par injection avec des évidements (42') en U qui sont entourés sur tout leur pourtour par la matière de manchon en formant des languettes (44) sur le côté externe des extrémités libres desquelles est disposée la nervure mentionnée (43').

10. Raccord pour tubes selon la revendication 1, caractérisé en ce que le manchon est constitué de métal et est muni d'un anneau à ressort ou analogues, dont la force de maintien s'exerçant contre le chanfrein est prévue pour être vaincue par la compression radiale de l'anneau ou des parties de ce dernier ou sur ce dernier.
